# EUROPÄISCHE PATENTANMELDUNG

(11) **EP 1 041 796 A2**
(43) Veröffentlichungstag der Anmeldung: **04.10.2000**
(21) Anmeldenummer: 00106214.0
(22) Anmeldetag: 22.03.2000
(51) Int. Cl.: H04M 1/00, H04M 1/725

(54) **Verfahren zur Rufumleitung und Telekommunikationsendgerät**

(30) Priorität: 30.03.1999 DE 19914402
(71) Anmelder: ROBERT BOSCH GMBH, 70442 Stuttgart (DE)
(72) Erfinder: Gieseke, Arnold, 31180 Giesen (DE)

(57) **Zusammenfassung**

Es werden ein Verfahren und Telekommunikationsendgeräte (1, 5) zur automatischen Einstellung einer Rufumleitung vorgeschlagen. Dabei werden Signale (75) drahtlos mit geringer Leistung zwischen einem ersten Telekommunikationsendgerät (1) und einem zweiten, vorzugsweise mobilen, Telekommunikationsendgerät (5) übertragen. Die Empfangsqualität der übertragenen Signale wird geprüft. Eine Rufumleitung vom ersten Telekommunikationsendgerät (1) zum zweiten Telekommunikationsendgerät (5) wird in Abhängigkeit der Empfangsqualität geschaltet.

## Beschreibung

### Stand der Technik

Die Erfindung geht von einem Verfahren zur Rufumleitung nach der Gattung des unabhängigen Anspruchs 1, von einem Telekommunikationsendgerät nach der Gattung des unabhängigen Anspruchs 8 und von einem Telekommunikationsendgerät nach der Gattung des unabhängigen Anspruchs 9 aus.

Verfahren zur Rufumleitung eines an einem Telekommunikationsendgerät eingehenden Rufs sind bereits bekannt. Ebenso sind Telekommunikationsendgeräte mit einer Sendevorrichtung und einer Empfangsvorrichtung bekannt.

### Vorteile der Erfindung

Das erfindungsgemäße Verfahren und die erfindungsgemäßen Telekommunikationsendgeräte mit den Merkmalen der unabhängigen Ansprüche 1, 8 und 9 haben demgegenüber den Vorteil, daß Signale drahtlos mit geringer Leistung zwischen dem ersten Telekommunikationsendgerät und einem zweiten, vorzugsweise mobilen, Telekommunikationsendgerät übertragen werden, daß die Empfangsqualität der übertragenen Signale geprüft wird, und daß in Abhängigkeit der Empfangsqualität eine Rufumleitung vom ersten Telekommunikationsendgerät zum zweiten Telekommunikationsendgerät geschaltet wird. Auf diese Weise kann die Rufumleitung von für das erste Telekommunikationsendgerät eingehenden Rufen zum zweiten Telekommunikationsendgerät automatisch, das heißt ohne Interaktion des Benutzers des ersten Telekommunikationsendgerätes erfolgen. Besonders bei Ausbildung des ersten Telekommunikationsendgerätes als schnurgebundenes Telekommunikationsendgerät und des zweiten Telekommunikationsendgerätes als mobiles Telekommunikationsendgerät ergibt sich der Vorteil, daß ein für das erste Telekommunikationsendgerät eingehender Ruf an das mobile zweite Telekommunikationsendgerät umgeleitet wird, sobald sich der Benutzer mit dem mobilen zweiten Telekommunikationsendgerät soweit vom ersten Telekommunikationsendgerät entfernt hat, daß die Übertragung von Signalen mit geringer Leistung zwischen dem ersten Telekommunikationsendgerät und dem zweiten Telekommunikationsendgerät unterbrochen wird. Auf diese Weise wird automatisch die An- oder Abwesenheit des Benutzers am Ort des schnurgebundenen ersten Telekommunikationsendgerätes erkannt und bei Abwesenheit eine Rufumleitung zum mobilen zweiten Telekommunikationsendgerät geschaltet, so daß der Benutzer automatisch permanent erreichbar ist. Bei geschalteter Rufumleitung ist der Benutzer dabei innerhalb des gesamten Mobilfunknetzes sowohl mit der Telefonnummer seines mobilen zweiten Telekommunikationsendgerätes als auch mit der Telefonnummer seines schnurgebundenen ersten Telekommunikationsendgerätes erreichbar.

Durch die in den Unteransprüchen aufgeführten Maßnahmen sind vorteilhafte Weiterbildungen und Verbesserungen des im unabhängigen Anspruch 1 angegebenen Verfahrens und des im unabhängigen Anspruch 9 angegebenen Telekommunikationsendgerätes möglich.

Besonders vorteilhaft ist es, daß eine geschaltete Rufumleitung vom ersten Telekommunikationsendgerät zum zweiten Telekommunikationsendgerät aufgehoben wird, wenn die Empfangsqualität den vorgegebenen Wert, insbesondere für eine zweite vorgegebene Zeit, überschreitet. Auf diese Weise wird die Rufumleitung automatisch wieder rückgängig gemacht, wenn sich das erste Telekommunikationsendgerät und das zweite Telekommunikationsendgerät wieder ausreichend nahe sind, so daß insbesondere bei Ausbildung des ersten Telekommunikationsendgerätes als schnurgebundenes Telekommunikationsendgerät und des zweiten Telekommunikationsendgerätes als mobiles Telekommunikationsendgerät die kostenintensivere Rufumleitung über ein Mobilfunknetz zum mobilen zweiten Telekommunikationsendgerät nur im Bedarfsfall und somit kostenoptimiert verwendet wird.

Besonders vorteilhaft ist es, daß die Signale eine Kennung umfassen, daß die Empfangsqualität geprüft wird, indem auf den Empfang der Kennung geprüft wird, und daß eine Rufumleitung vom ersten Telekommunikationsendgerät zum zweiten Telekommunikationsendgerät geschaltet wird, wenn innerhalb der ersten vorgegebenen Zeit kein Empfang der Kennung festgestellt wurde. Auf diese Weise läßt sich die automatische Rufumleitung besonders einfach, aufwandsarm und präzise realisieren. Durch die erste vorgegebene Zeit wird eine Hysterese bewirkt, die eine frühzeitige Rufumleitung für den Fall verhindert, daß nur eine kurzzeitige Unterbrechung der drahtlosen Übertragung von Signalen zwischen dem ersten und dem zweiten Telekommunikationsendgerät vorliegt.

In entsprechender Weise wird auch für die Aufhebung einer geschalteten Rufumleitung vom ersten Telekommunikationsendgerät zum zweiten Telekommunikationsendgerät eine Hysterese bewirkt, wenn dafür das Kriterium gewählt wird, daß innerhalb der zweiten vorgegebenen Zeit mindestens eine vorgegebene Zahl von Kennungen empfangen wurde.

### Zeichnung

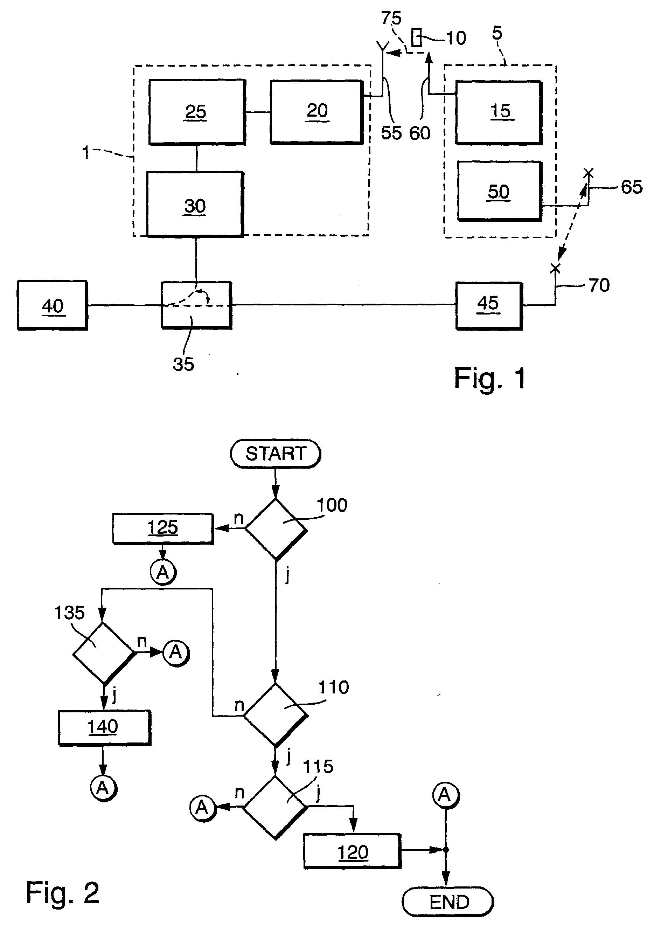

Ein Ausführungsbeispiel der Erfindung ist in der Zeichnung dargestellt und in der nachfolgenden Beschreibung näher erläutert. Es zeigen Figur 1 ein Blockschaltbild für eine erfindungsgemäße Realisierung einer automatisierten Rufumleitung von einem ersten Telekommunikationsendgerät zu einem zweiten Telekommunikationsendgerät und Figur 2 einen Ablaufplan für eine Auswerteeinheit des ersten Telekommunikationsendgerätes.

### Beschreibung des Ausführungsbeispiels

In Figur 1 kennzeichnet 1 ein schnurgebundenes erstes Telekommunikationsendgerät und 5 ein mobiles zweites Telekommunikationsendgerät. Es könnten jedoch auch beide Telekommunikationsendgeräte 1, 5 schnurgebunden oder beide Telekommunikationsendgeräte 1, 5 mobil ausgebildet sein. Das schnurgebundene erste Telekommunikationsendgerät 1 umfaßt eine Auswerteeinheit 25, die einerseits an eine Empfangsvorrichtung 20 und andererseits an eine Netzanschlußeinheit 30 angeschlossen ist. Die Empfangsvorrichtung 20 ist mit einer Empfangsantenne 55 verbunden. Die Netzanschlußeinheit 30 ist schnurgebunden an ein Telekommunikationssystem 35 angeschlossen. An das Telekommunikationssystem 35 ist außerdem ein rufender Teilnehmer 40 und eine Basisstation 45 eines mobilen Telekommunikationsnetzes angeschlossen. Das mobile zweite Telekommunikationsendgerät 5 umfaßt eine Sendevorrichtung 15 mit einer Sendeantenne 60. Das mobile zweite Telekommunikationsendgerät 5 umfaßt ferner eine Sende-/Empfangsvorrichtung 50, die mit einer ersten Sende-/Empfangsantenne 65 verbunden ist. Die Basisstation 45 ist mit einer zweiten Sende-/Empfangsantenne 70 verbunden.

Die Sendevorrichtung 15 strahlt über die Sendeantenne 60 Signale 75 mit geringer Leistung ab, die mindestens eine Kennung 10 umfassen. In Abhängigkeit der Sendeleistung für die Abstrahlung der Signale 75 und des Abstandes der Empfangsantenne 55 von der Sendeantenne 60 ergibt sich eine Empfangsqualität, mit der die Signale 75 in der Empfangsvorrichtung 20 empfangen werden. Die Empfangsqualität der von der Sendevorrichtung 15 zur Empfangsvorrichtung 20 übertragenen Signale 75 wird in der Auswerteeinheit 25 geprüft. Wenn die Empfangsqualität einen vorgegebenen Wert unterschreitet, so veranlaßt die Auswerteeinheit 25 über die Netzanschlußeinheit 30 das Telekommunikationssystem 35 zu einer Rufumleitung von für das erste Telekommunikationsendgerät 1 eingehenden Rufen zum zweiten Telekommunikationsendgerät 5 über die Basisstation 45 und die durch die beiden Sende-/Empfangsantennen 65, 70 gebildete Luftschnittstelle. Der rufende Teilnehmer 40, der die Rufnummer des ersten Telekommunikationsendgerätes 1 gewählt hat, wird dann aufgrund der Rufumleitung über die Basisstation 45 und die Luftschnittstelle 65, 70 mit dem zweiten Telekommunikationsendgerät 5 verbunden. Die Rufumleitung ist in Figur 1 durch die beiden gestrichelten Übertragungswege in dem Telekommunikationssystem 35 und die Pfeildarstellung hervorgehoben. Wenn sich also der Benutzer des mobilen zweiten Telekommunikationsendgerätes 5 mit dem zweiten Telekommunikationsendgerät 5 vom schnurgebundenen ersten Telekommunikationsendgerät 1 entfernt, so wird aufgrund der mit geringer Leistung abgestrahlten Signale 75 die in der Auswerteeinheit 25 geprüfte Empfangsqualität der übertragenen Signale geringer, bis der vorgegebene Wert unterschritten und eine Rufumleitung vom ersten Telekommunikationsendgerät 1 zum zweiten Telekommunikationsendgerät 5 durch die Auswerteeinheit 25 aktiviert wird. Der Benutzer ist darm, ohne selbst die Rufumleitung manuell einstellen zu müssen, automatisch an seinem mobilen zweiten Telekommunikationsendgerät 5 erreichbar, auch wenn der rufende Teilnehmer 40 die Rufnummer des ersten Telekommunikationsendgerätes 1 anwählt.

Um zu verhindern, daß eine nur kurzzeitige Verschlechterung der Empfangsqualität gleich zu einer Rufumleitung führt, kann zusätzlich eine Hysterese dadurch realisiert werden, daß eine Rufumleitung nur dann von der Auswerteeinheit 25 aktiviert wird, wenn die Empfangsqualität den vorgegebenen Wert für mindestens eine erste vorgegebene Zeit unterschreitet.

Ist die Rufumleitung vom ersten Telekommunikationsendgerät 1 zum zweiten Telekommunikationsendgerät 5 geschaltet und nähert sich das mobile zweite Telekommunikationsendgerät 5 soweit an das erste Telekommunikationsendgerät 1 an, daß die Empfangsqualität für den Empfang der Signale 75 in der Empfangsvorrichtung 20 über den vorgegebenen Wert ansteigt, so veranlaßt die Auswerteeinheit 25 über die Netzanschlußeinheit 30 das Telekommunikationssystem 35 dazu, diese Rufumleitung wie durch den im Telekommunikationssystem 35 gemäß Figur 1 dargestellten Doppelpfeil angedeutet, aufzuheben. Auch hierbei kann wieder eine Hysterese dadurch bewirkt werden, daß die Aufhebung der Rufumleitung erst dann erfolgt, wenn die Empfangsqualität den vorgegebenen Wert für mindestens eine zweite vorgegebene Zeit überschreitet. Eine nur kurzfristige entsprechende Annäherung des mobilen zweiten Telekommunikationsendgerätes 5 an das schnurgebundene erste Telekommunikationsendgerät 1 bleibt dann ohne Wirkung auf die Rufumleitung.

Für die Prüfung der Empfangsqualität der Signale 75 können unterschiedliche Verfahren angewendet werden. Beispielsweise kann beim Empfang der Signale 75 in der Empfangsvorrichtung 20 von der Auswerteeinheit 25 eine Fehlerrate ermittelt werden, besonders dann, wenn die von der Sendevorrichtung 15 abzustrahlenden Signale 75 in der Auswerteeinheit 25 bekannt sind. Die Fehlerrate kann in diesem Fall durch einen einfachen Vergleich der in der Auswerteeinheit 25 bekannten mit den von der Empfangsvorrichtung 20 empfangenen Signalen 75 ermittelt werden. Steigt die Fehlerrate, so sinkt die Empfangsqualität. Wenn die Fehlerrate eine vorgegebene Fehlerrate überschreitet, so aktiviert die Auswerteeinheit 25 die Rufumleitung. Die beschriebene Hysterese kann dadurch erreicht werden, daß die Rufumleitung erst dann erfolgt, wenn die Fehlerrate mindestens für die erste vorgegebene Zeit die vorgegebene Fehlerrate überschreitet. Eine geschaltete Rufumleitung wird dann entsprechend, veranlaßt durch die Auswerteeinheit 25, aufgehoben, wenn die Fehlerrate beim Empfang der Signale 75 die vorgegebene Fehlerrate unterschreitet, wobei es für die Realisierung der beschriebenen Hysterese zusätzlich vorgesehen sein kann, daß die Unterschreitung der vorgegebenen Fehlerrate mindestens für die zweite vorgegebene Zeit erfolgen muß, bevor die Rufumleitung aufgehoben werden kann.

Es kann vorgesehen sein, daß mit den Signalen 75 eine Kennung 10 von der Sendevorrichtung 15 über die Sendeantenne 60 abgestrahlt und an die Empfangsvorrichtung 20 übertragen wird. Die Auswerteeinheit 25 kann mit den Signalen 75 an die Empfangsvorrichtung 20 übertragene Kennungen 10 erkennen. Die Empfangsqualität kann daher von der Auswerteeinheit 25 auch dadurch geprüft werden, indem auf den Empfang der Kennung 10 geprüft wird. Wird aufgrund entsprechender Entfernung zwischen dem ersten Telekommunikationsendgerät 1 und dem zweiten Telekommunikationsendgerät 5 von der Auswerteeinheit 25 kein Empfang der Kennung detektiert, beziehungsweise unter Berücksichtigung der beschriebenen Hysterese mindestens innerhalb der ersten vorgegebenen Zeit kein Empfang der Kennung detektiert, so aktiviert die Auswerteeinheit 25 die Rufumleitung vom ersten Telekommunikationsendgerät 1 zum zweiten Telekommunikationsendgerät 5. Die Aufhebung einer geschalteten Rufumleitung kann dann erfolgen, wenn sich das erste Telekommunikationsendgerät 1 und das zweite Telekommunikationsendgerät 5 wieder soweit angenähert haben, daß wieder eine Kennung 10 von der Auswerteeinheit 25 detektiert wurde, beziehungsweise bei Realisierung der beschriebenen Hysterese mindestens innerhalb der zweiten vorgegebenen Zeit mindestens eine vorgegebene Zahl von Kennungen 10 empfangen wurde. Die Kennungen 10 kennzeichnen das Leistungsmerkmal Rufumleitung, so daß sie eindeutig und zweifelsfrei für die Einstellung dieses Leistungsmerkmals herangezogen werden können.

In einer alternativen, nicht dargestellten Ausführungsform kann es vorgesehen sein, daß die Auswerteeinheit 25 nicht eine Rufumleitung von für das erste Telekommunikationsendgerät 1 eingehende Rufe zum zweiten Telekommunikationsendgerät 5 aktiviert, sondern eine Rufumleitung von für das zweite mobile Telekommunikationsendgerät 5 eingehende Rufe zum ersten schnurgebundenen Telekommunikationsendgerät 1. Wählt bei dieser alternativen Ausführungsform der rufende Teilnehmer 40 die Telefonnummer des zweiten Telekommunikationsendgerätes 5, so wird bei entsprechendem Abstand zwischen der Empfangsantenne 55 des ersten Telekommunikationsendgerätes 1 und der Sendeantenne 60 des zweiten Telekommunikationsendgerätes 5 eine Verbindung zwischen dem ruf enden Teilnehmer 40 und dem zweiten Telekommunikationsendgerät 5 aufgebaut. Nähern sich die Empfangsantenne 55 und die Sendeantenne 60 soweit, daß die Signale 75 mit einer Empfangsqualität oberhalb dem vorgegebenen Wert von der Auswerteeinheit 25 detektiert werden, so veranlaßt die Auswerteeinheit 25 eine Rufumleitung von für das zweite Telekommunikationsendgerät 5 eingehende Rufe zum ersten Telekommunikationsendgerät 1, die erst dann wieder aufgehoben wird, wenn sich die Sendeantenne 60 und die Empfangsantenne 55 soweit voneinander entfernen, daß die Empfangsqualität wieder unter den vorgegebenen Wert absinkt. Bei der Prüfung der Empfangsqualität kann dabei, wie beschrieben, jeweils eine Hysterese vorgesehen sein, die eine Rufumleitung oder deren Aufhebung von einem für mindestens eine entsprechende Zeit vorliegenden Prüfergebnis in der Auswerteeinheit 25 abhängig macht.

In Figur 2 ist ein Ablaufplan für die Funktionsweise der Auswerteeinheit 25 dargestellt. Bei einem Programmpunkt 100 prüft die Auswerteeinheit 25, ob Signale 75 in der Empfangsvorrichtung 20 innerhalb einer dritten vorgegebenen Zeit detektiert wurden. Ist dies der Fall, so wird zu einem Programmpunkt 110 verzweigt, andernfalls wird zu einem Programmpunkt 125 verzweigt. Bei Programmpunkt 125 veranlaßt die Auswerteeinheit 25 eine Rufumleitung von für das erste Telekommunikationsendgerät 1 eingehende Rufe zum zweiten Telekommunikationsendgerät 5, falls eine solche Rufumleitung nicht bereits geschaltet ist. Anschließend wird das Programm verlassen. Bei Programmpunkt 110 prüft die Auswerteeinheit 25, ob eine Rufumleitung von für das erste Telekommunikationsendgerät 1 eingehende Rufe zum zweiten Telekommunikationsendgerät 5 geschaltet ist, indem sie beispielsweise über die Netzanschlußeinheit 30 eine entsprechende Anfrage an das Telekommunikationssystem 35 richtet. Es kann jedoch auch vorgesehen sein, daß die Auswerteeinheit 25 beim Aktivieren oder Aufheben einer Rufumleitung eine Variable in einem ihr zugeordneten Speicher setzt beziehungsweise zurücksetzt, so daß die Auswerteeinheit 25 das Bestehen einer Rufumleitung durch Abfrage dieser Variablen auf einfache Weise prüfen kann. Stellt die Auswerteeinheit 25 fest, daß eine entsprechende Rufumleitung zum zweiten Telekommunikationsendgerät 5 geschaltet ist, so wird zu einem Programmpunkt 115 verzweigt, andernfalls wird zu einem Programmpunkt 135 verzweigt. Bei Programmpunkt 115 prüft die Auswerteeinheit 25, ob die Empfangsqualität der Signale 75 für mindestens die zweite vorgegebene Zeit über dem vorgegebenen Wert liegt. Ist dies der Fall, so wird zu einem Programmpunkt 120 verzweigt, andernfalls wird das Programm verlassen. Bei Programmpunkt 120 veranlaßt die Auswerteeinheit 25 das Telekommunikationssystem 35 über die Netzanschlußeinheit 30, die Rufumleitung zum zweiten Telekommunikationsendgerät 5 aufzuheben. Anschließend wird das Programm verlassen. Bei Programmpunkt 135 prüft die Auswerteeinheit 25, ob die Empfangsqualität der empfangenen Signale 75 für die erste vorgegebene Zeit unterhalb des vorgegebenen Wertes liegt. Ist dies der Fall, so wird zu einem Programmpunkt 140 verzweigt, andernfalls wird das Programm verlassen. Bei Programmpunkt 140 veranlaßt die Auswerteeinheit 25 das Telekommunikationssystem 35 über die Netzanschlußeinheit 30, die Rufumleitung von für das erste Telekommunikationsendgerät 1 eingehende Rufe zum zweiten Telekommunikationsendgerät 5 zu schalten. Anschließend wird das Programm verlassen.

Gemäß Figur 1 erfolgt die Übertragung der Signale 75 über Funk, wobei die Sendevorrichtung 15 aufgrund der geringen Abstrahlleistung nur eine sehr kurze Reichweite von beispielsweise 5 bis 10 Metern hat. Die Sendevorrichtung 15 ist gemäß Figur 1 in das zweite Telekommunikationsendgerät 5 beispielsweise durch Einbau integriert, kann jedoch auch über eine Schnittstelle extern mit dem zweiten Telekommunikationsendgerät 5 verbunden oder an das zweite Telekommunikationsendgerät 5 angebaut sein. Entsprechendes gilt für die Empfangsvorrichtung 20 und das erste Telekommunikationsendgerät 1. Für das Funksystem, das die Kommunikation geringer Reichweite zwischen den beiden Telekommunikationsendgeräten 1, 5 ermöglicht, kommen alle Systeme in Betracht, die mit einer geringen Sendeleistung, zum Beispiel im Pulsbetrieb, Signale 75 mit der Kennung 10 senden, wobei die Kennung 10 digital ausgebildet sein kann. Die Funktionsweise basiert dabei auf Systemen, wie sie beispielsweise aus der Kraftfahrzeugtechnik als Fernbedienung für die Türentriegelung oder Garagentorfernbedienungen verwendet werden. Ebenso sind Systeme wie SWAP oder Bluetooth gemäß dem Artikel "The missing link" von Dr. YRJÖ NEUVO, in Mobile Communications International, September 1998, Seiten 26 und 27 für eine solche Anwendung geeignet. Es kann auch vorgesehen sein, zwischen der Sendevorrichtung 15 und der Empfangsvorrichtung 20 die Signale 75 optisch, beispielsweise im Infrarotwellenlängenbereich, zu übertragen, wobei dann die Sendeantenne 60 durch einen Fotosender, beispielsweise eine Leucht- oder Laserdiode, und die Empfangsantenne 55 durch einen Fotoempfänger, beispielsweise eine Fotodiode ersetzt werden müßten. Das Telekommunikationssystem 35 kann Teil eines Festnetzes sein, wohingegen die Basisstation 45 vorzugsweise Teil eines Mobilfunknetzes ist.

## Patentansprüche

1. Verfahren zur Umleitung eines für ein erstes, vorzugsweise schnurgebundenes, Telekommunikationsendgerät (1) eingehenden Rufs, dadurch gekennzeichnet, daß Signale (75) drahtlos mit geringer Leistung zwischen dem ersten Telekommunikationsendgerät (1) und einem zweiten, vorzugsweise mobilen, Telekommunikationsendgerät (5) übertragen werden, daß die Empfangsqualität der übertragenen Signale (75) geprüft wird, und daß in Abhängigkeit der Empfangsqualität eine Rufumleitung vom ersten Telekommunikationsendgerät (1) zum zweiten Telekommunikationsendgerät (5) geschaltet wird.

2. Verfahren nach Anspruch 1, dadurch gekennzeichnet, daß eine Rufumleitung vom ersten Telekommunikationsendgerät (1) zum zweiten Telekommunikationsendgerät (5) geschaltet wird, wenn die Empfangsqualität einen vorgegebenen Wert, insbesondere für mindestens eine erste vorgegebene Zeit, unterschreitet.

3. Verfahren nach Anspruch 1 oder 2, dadurch gekennzeichnet, daß eine geschaltete Rufumleitung vom ersten Telekommunikationsendgerät (1) zum zweiten Telekommunikationsendgerät (5) aufgehoben wird, wenn die Empfangsqualität den vorgegebenen Wert, insbesondere für mindestens eine zweite vorgegebene Zeit, überschreitet.

4. Verfahren nach Anspruch 1, 2 oder 3, dadurch gekennzeichnet, daß die Signale (75) eine Kennung (10) umfassen, daß die Empfangsqualität geprüft wird, indem auf den Empfang der Kennung (10) geprüft wird, und daß eine Rufumleitung vom ersten Telekommunikationsendgerät (1) zum zweiten Telekommunikationsendgerät (5) geschaltet wird, wenn mindestens innerhalb der ersten vorgegebenen Zeit kein Empfang der Kennung (10) festgestellt wurde.

5. Verfahren nach Anspruch 3, dadurch gekennzeichnet, daß eine geschaltete Rufumleitung vom ersten Telekommunikationsendgerät (1) zum zweiten Telekommunikationsendgerät (5) aufgehoben wird, wenn mindestens innerhalb der zweiten vorgegebenen Zeit mindestens eine vorgegebene Zahl von Kennungen (10) empfangen wurde.

6. Verfahren nach einem der vorherigen Ansprüche, dadurch gekennzeichnet, daß die Empfangsqualität geprüft wird, indem eine Fehlerrate beim Empfang der Signale (75) ermittelt wird, und daß eine Rufumleitung vom ersten Telekommunikationsendgerät (1) zum zweiten Telekommunikationsendgerät (5) geschaltet wird, wenn die Fehlerrate eine vorgegebene Fehlerrate für mindestens die erste vorgegebene Zeit überschreitet.

7. Verfahren nach Anspruch 5, dadurch gekennzeichnet, daß eine geschaltete Rufumleitung vom ersten Telekommunikationsendgerät (1) zum zweiten Telekommunikationsendgerät (5) aufgehoben wird, wenn die Fehlerrate die vorgegebene Fehlerrate für mindestens die zweite vorgegebene Zeit unterschreitet.

8. Telekommunikationsendgerät (5) mit einer Sendevorrichtung (15), dadurch gekennzeichnet, daß die Sendevorrichtung (15) Signale (75) mit geringer Leistung abstrahlt, wobei die Signale (75) mindestens eine Kennung (10) umfassen, die das Leistungsmerkmal Rufumleitung kennzeichnet, wobei die Signale (75) mit der mindestens einen Kennung (10) zum Empfang in einem weiteren Telekommunikationsendgerät (1) vorgesehen sind und wobei eine Prüfung der Empfangsqualität der abgestrahlten Signale (75) erfolgt und eine Rufumleitung von für eines der beiden Telekommunikationsendgeräte (1, 5) eingehenden Rufen zum entsprechend anderen Telekommunikationsendgerät in Abhängigkeit des Prüfergebnisses geschaltet wird.

9. Telekommunikationsendgerät (1) mit einer Empfangsvorrichtung (20), dadurch gekennzeichnet, daß eine Auswerteeinheit (25) vorgesehen ist, die den Empfang von Signalen (75) eines zweiten Telekommunikationsendgerätes (5) prüft, und daß die Auswerteeinheit (25) eine Rufumleitung von für eines der beiden Telekommunikationsendgeräte (1, 5) eingehenden Rufen zum entsprechend anderen Telekommunikationsendgerät in Abhängigkeit der Empfangsqualität der empfangenen Signale (75) aktiviert.

10. Telekommunikationsendgerät nach Anspruch 9, dadurch gekennzeichnet, daß die Auswerteeinheit (25) eine Rufumleitung von für eines der beiden Telekommunikationsendgeräte (1, 5) eingehenden Rufen zum entsprechend anderen Telekommunikationsendgerät aktiviert, wenn die Empfangsqualität einen vorgegebenen Wert, insbesondere für mindestens eine erste vorgegebene Zeit, unterschreitet.

11. Telekommunikationsendgerät (1) nach Anspruch 9 oder 10, dadurch gekennzeichnet, daß die Auswerteeinheit (25) die Aufhebung einer geschalteten Rufumleitung aktiviert, wenn die Empfangsqualität den vorgegebenen Wert, insbesondere für mindestens eine zweite vorgegebene Zeit, überschreitet.

12. Telekommunikationsendgerät (1) nach Anspruch 9, 10 oder 11, dadurch gekennzeichnet, daß die Auswerteeinheit (25) prüft, ob von der Empfangsvorrichtung (20) empfangene Signale (75) eine Kennung (10) aufweisen, daß die Auswerteeinheit (25) eine Rufumleitung von für eines der beiden Telekommunikationsendgeräte (1, 5) eingehenden Rufen zum entsprechend anderen Telekommunikationsendgerät aktiviert, wenn mindestens für die erste vorgegebene Zeit keine Kennung (10) detektiert wurde.

13. Telekommunikationsendgerät (1) nach Anspruch 11 oder 12, dadurch gekennzeichnet, daß die Auswerteeinheit (25) eine Aufhebung einer geschalteten Rufumleitung aktiviert, wenn mindestens innerhalb der zweiten vorgegebenen Zeit mindestens eine vorgegebene Zahl von Kennungen (10) in den empfangenen Signalen (75) detektiert wurde.

14. Telekommunikationsendgerät (1) nach einem der Ansprüche 9 bis 13, dadurch gekennzeichnet, daß die Auswerteeinheit (25) die Empfangsqualität prüft, indem eine Fehlerrate beim Empfang der Signale (75) ermittelt wird, und daß die Auswerteeinheit (25) eine Rufumleitung von für eines der beiden Telekommunikationsendgeräte (1, 5) eingehenden Rufen zum entsprechend anderen Telekommunikationsendgerät aktiviert, wenn die Fehlerrate eine vorgegebene Fehlerrate für mindestens die erste vorgegebene Zeit überschreitet.

15. Telekommunikationsendgerät (1) nach Anspruch 14, dadurch gekennzeichnet, daß die Auswerteeinheit (25) eine Aufhebung einer geschalteten Rufumleitung aktiviert, wenn die Fehlerrate die vorgegebene Fehlerrate für mindestens die zweite vorgegebene Zeit unterschreitet.
